# EUROPÄISCHE PATENTANMELDUNG

(11) **EP 0 546 467 A2**
(43) Veröffentlichungstag der Anmeldung: **16.06.1993**
(21) Anmeldenummer: 92120706.4
(22) Anmeldetag: 04.12.1992
(51) Int. Cl.: H04M 3/42, H04Q 7/04, H04M 3/54

(54) **Kommunikationssystem**

(30) Priorität: 12.12.1991 DE 4140974
(71) Anmelder: Alcatel SEL Aktiengesellschaft, D-70435 Stuttgart (DE)
(72) Erfinder: Wizgall, Manfred, Dr., W-7000 Stuttgart 1 (DE); Klotz, Bernhard, W-7000 Stuttgart 31 (DE); Kuttner, Axel, W-7000 Stuttgart 30 (DE)
(74) Vertreter: Brose, Gerhard

(57) **Zusammenfassung**

Begibt sich ein Teilnehmer eines drahtlosen Kommunikationsnetzes an ein Endgerät eines drahtgebundenen Kommunikationsnetzes, so ist er in der Regel unter seiner für das drahtlose Kommunikationsnetz geltenden Kennummer nicht zu erreichen. Will ihn jemand erreichen, muß er die Telefonnummer des Endgerätes kennen, bei dem sich der Teilnehmer des drahtlosen Kommunikationsnetzes befindet. Beim Einrichten einer Anrufumleitung über das Endgerät des drahtlosen Kommunikationsnetzes (Mobilfunkgerät) muß der Teilnehmer dieses Netzes bereits beim Verlassen seines Endgerätes (Mobilfunkgerätes) die Telefonnummer des Endgerätes am drahtgebundenen Kommunikationsnetz wissen, zu dem er sich begeben will. Dies ist meistens nicht der Fall. Es wird ein Kommunikationssystem vorgeschlagen, das eine Weiterleitung von Rufanforderungen an den Teilnehmer des drahtlosen Kommunikationsnetzes an jedes beliebige Endgerät eines drahtgebundenen Kommunikationsnetzes veranlaßt. In der Speichereinrichtung des drahtlosen Kommunikationsnetzes wird das Endgerät des drahtgebundenen Kommunikationsnetzes so behandelt, als ob es das Endgerät des drahtgebundenen Kommunikationsnetzes, d.h. z.B. das Mobilfunkgerät des betreffenden Mobilfunkteilnehmers, wäre.

## Beschreibung

Die Erfindung betrifft ein Kommunikationssystem, insbesondere ein aus unterschiedlichen Kommunikationsnetzen bestehendes Kommunikationssystem.

In herkömmlichen Kommunikationsnetzen ist nicht den Teilnehmern, sondern den Endgeräten eine Teilnehmernummer zugeordnet. So hat beispielsweise ein und derselbe Teilnmehmer eine private Teilnehmernummer (Telefonnummer) und eine oder mehrere davon verschiedene dienstliche. Wünschenswert ist aber ein Kommunikationssystem, in dem nicht die Endgeräte den Teilnehmernummern, sondern die Teilnehmer den Teilnehmernummern zugeordnet sind. Die im Aufbau befindlichen Mobilfunknetze nach dem GSM-Standard, im folgenden GSM-Netze genannt, sehen eine solche Zuordnung von Teilnehmernummer zu Teilnehmer, unabhängig vom Endgerät, vor. Dies geschieht durch jeweils eine eindeutige Zuweisung einer Kennummer an jeweils einen Mobilfunk-Teilnehmer. So kann ein Mobilfunk-Teilnehmer, dessen Kennummer neben weiterer Information in einer Identitätskarte gespeichert ist, außer seinem eigenen jedes andere GSM-Endgerät benutzen. Anfallende Gebühren werden dem Mobilfunk-Teilnehmer und nicht dem Inhaber des Endgerätes berechnet.

Häufig kommt es vor, daß ein Mobilfunk-Teilnehmer sein Auto und damit sein Mobilfunkgerät verläßt und jemanden aufsucht, bei dem sich ein Endgerät eines drahtgebundenen Kommunikationsnetzes befindet. Will der Mobilfunkteilnehmer weiter im GSM-Netz erreichbar bleiben, muß er sein Mobilgerät mitnehmen. Dies ist umständlich und mit zusätzlichen Kosten verbunden.

Aufgabe der Erfindung ist es daher, ein Kommunikationssystem mit unterschiedlichen Kommunikationsnetzen so zu gestalten, daß Teilnehmer in diesem Kommunikationssystem in jedem dieser Kommunikationsnetze auf einfache Art erreichbar sind. Diese Aufgabe wird gelöst durch ein Kommunikationssystem mit der Merkmalskombination der Ansprüche 1 und/oder 2. Das erfindungsgemäße Kommunikationssystem hat den Vorteil, daß der Mobilfunk-Teilnehmer unabhängig von seinem Mobilfunkgerät nur mit Hilfe seiner Kennummer in jedem der anderen Kommunikationsnetze erreichbar ist. Seine Mobilität wird damit erheblich erhöht.

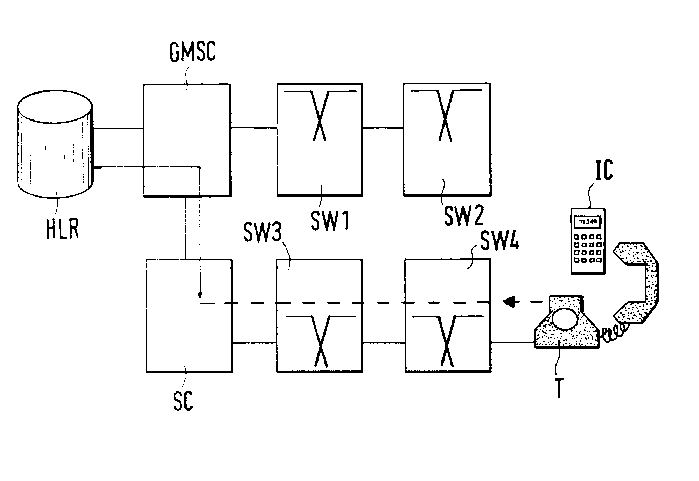

Ein Ausführungsbeispiel der Erfindung wird anhand der einzigen Figur beschrieben und erläutert. Sie zeigt: die Verbindung eines öffentlichen drahtgebundenen Netzes mit einem GSM-Netz.

In der einzigen Figur sind mit SW1, SW2 Vermittlungsstellen eines drahtlosen Kommunikationsnetzes und mit SW3, SW4 ISDN-Vermittlungsstellen eines drahtgebundenen Kommunikationsnetzes bezeichnet. Die Vermittlungsstellen SW1 und SW2 sind miteinander verbunden, die Vermittlungsstellen SW3 und SW4 ebenfalls. Vermittlungsstelle SW1 ist mit einer als GMSC bezeichneten Mobilfunk-Vermittlungsstelle verbunden, die ihrerseits mit einer Speichereinrichtung HLR (Home Location Register) in Verbindung steht. Die Vermittlungsstelle SW3 steht mit einem Service-Center SC in Verbindung. Das Service Center selbst ist ebenfalls mit der Mobilfunk-Vermittlungsstelle GMSC verbunden. Weiterhin gibt es in der einzigen Figur ein mit der Vermittlungsstelle SW4 verbundenes Endgerät, sowie eine mit IC bezeichnete Identitätskarte. Das System funktioniert wie folgt: Die Speichereinrichtung HLR sowie die Vermittlungsstellen GMSC, SW1 und SW2 sind Bestandteile eines drahtlosen Kommunikationsnetzes. Die Vermittlungsstellen SW3 und SW4 gehören zu drahtgebundenen Netzen. Das Service Center SC befindet sich an der Grenze zwischen drahtlosem und drahtgebundenem Kommunikationsnetz. Das Service Center SC kann z.B. vom Operator des drahtlosen Kommunikationsnetzes betrieben werden, um seinen Teilnehmern Mobilität auch im drahtgebundenen Kommunikationsnetz anzubieten. Für einen Teilnehmer aus dem drahtlosen Kommunikationsnetz kann folgender Fall eintreten: Der Teilnehmer entfernt sich von seinem Mobilgerät und begibt sich an eine Stelle, in der sich ein Endgerät eines drahtgebundenen Kommunikationsnetzes befindet. Bei diesem Endgerät kann es sich beispielsweise um das mit T bezeichnete Endgerät, wie z.B. ein Telefon, in der einzigen Figur handeln. In herkömmlichen Netzen ist der Teilnehmer des drahtlosen Kommunikationsnetzes nur dann am Endgerät T erreichbar, wenn derjenige, der ihn erreichen will, weiß, daß er sich dort befindet. Gemäß der Erfindung hat der Teilnehmer des drahtlosen Kommunikationsnetzes jedoch jetzt die Möglichkeit, vom Endgerät T aus über das Service-Center SC die Speichereinrichtung HLR zu veranlassen, Anrufe, die an seine Kennummer gerichtet sind, an das Endgerät T weiterzuleiten. Das Endgerät T übernimmt damit die Rolle eines Endgerätes des drahtlosen Kommunikationsnetzes. Das Service Center bildet dabei den Zugang zur Mobilfunk-Vermittlungsstelle GMSC so nach, als ob der Teilnehmer von einer Vermittlungsstelle des drahtlosen Kommunikationsnetzes, beispielsweise von SW1 aus, über GMSC zur Speichereinrichtung HLR zugreifen würde, obwohl er sich im drahtgebundenen Kommunikationsnetz befindet.

Die Weiterleitung von Rufanforderungen auf das Endgerät T erfolgt auf verschiedene Weisen. Eine Möglichkeit besteht darin, daß der Teilnehmer des drahtlosen Kommunikationsnetzes einer im Service Center SC befindlichen Person mündlich mitteilt, eine solche Weiterleitung zu veranlassen. Eine andere Möglichkeit besteht darin, eine solche Weiterleitung mit Hilfe eines über die Tastatur einzugebenden Kodes zu bewerkstelligen. Noch eine weitere Möglichkeit ergibt sich, wenn das Endgerät T mit einer Kartenleseeinrichtung versehen ist, die Identitätskarte IC liest und die Weiterleitung von Rufanforderungen über das Service Center veranlaßt.

Mit Hilfe eines solchen Systems ist es möglich, einen oder mehrere Teilnehmer immer mittels seiner bzw. ihrer Kennummer und nicht mit Hilfe unterschiedlicher Endgerätenummern, d.h. herkömmlichen Teilnehmernummern wie z.B. Telefonnummern, zu erreichen. Der Teilnehmer ist in der Lage, jedes beliebige Endgerät zu "seinem Endgerät" zu machen.

## Patentansprüche

1. Kommunikationssystem mit wenigstens einem drahtgebundenen und wenigstens einem drahtlosen Kommunikationsnetz, in dem Teilnehmer des wenigstens einen drahtlosen Kommunikationsnetzes durch eine Kennummer identifiziert sind und in dem die Teilnehmer des wenigstens einen drahtlosen Kommunikationsnetzes durch Eingeben ihrer Kennummer in ein Endgerät des wenigstens einen drahtgebundenen Kommunikationsnetzes eine Weiterleitung von Rufanforderungen aus dem drahtlosen Kommunikationsnetz an ein Endgerät des drahtgebundenen Kommunikationsnetzes veranlassen.

2. Kommunikationssystem mit wenigstens einem drahtgebundenen und wenigstens einem drahtlosen Kommunikationsnetz, in dem Teilnehmer des wenigstens einen drahtlosen Kommunikationsnetzes jeweils durch eine auf einer Identitätskarte gespeicherten Kennummer identifiziert werden, in dem weiterhin Endgeräte des wenigstens einen drahtgebundenen Kommunikationsnetzes mit einer Kartenleseeinrichtung ausgestattet sind, und in dem die Teilnehmer des wenigstens einen drahtlosen Kommunikationsnetzes mit Hilfe der auf der jeweiligen Identitätskarte gespeicherten Information eine Weiterleitung von Rufanforderungen aus dem drahtlosen Kommunikationsnetz an ein Endgerät des drahtgebundenen Kommunikationsnetzes veranlassen.

3. Kommunikationssystem nach einem der Ansprüche 1 oder 2, in dem mehrere Teilnehmer gleichzeitig eine teilnehmerspezifische Weiterleitung und teilnehmerspezifische Ausgänge von Rufanforderungen aus dem drahtlosen Kommunikationsnetz an ein Endgerät des drahtgebundenen Kommunikationsnetzes veranlassen.
